# EUROPEAN PATENT APPLICATION

(11) **EP 4 797 868 A1**
(43) Date of publication of application: **26.08.2026**
(21) Application number: 26153207.1
(22) Date of filing: 21.01.2026
(51) Int. Cl.: H05B 6/06

(54) **A COOKING APPLIANCE AND OPERATING METHOD THEREOF**

(30) Priority: 24.02.2025 KR 20250023558
(71) Applicant: LG Electronics Inc., Seoul 07336 (KR); UNIST (Ulsan National Institute of Science and Technology), Ulju-gun, Ulsan 44919 (KR)
(72) Inventor: CHA, Kwanghyung, 08592 Seoul (KR); JEONG, Wonsik, 08592 Seoul (KR); KANG, Kyelyong, 08592 Seoul (KR); HAN, Jinwook, 08592 Seoul (KR); LEE, Junsuk, 44919 Ulsan (KR); JUNG, Jeehoon, 44919 Ulsan (KR)
(74) Representative: Ter Meer Steinmeister & Partner

(57) **Abstract**

A cooking appliance according to an embodiment of the present disclosure may include: a power supply; an inverter configured to switch a voltage input through the power supply; a working coil configured to generate a magnetic field when a current is supplied from the inverter; a controller configured to control a switching frequency of the inverter; and a voltage charging/discharging circuit configured to charge and discharge an input voltage input through the power supply to reduce a ripple of a resonance current flowing through the working coil.

## Description

### BACKGROUND OF THE INVENTION

### l.Field of the Invention

The present disclosure relates to a cooking appliance and an operating method thereof. More particularly, the present disclosure relates to a cooking appliance for heating food using an induction heating method and an operating method thereof.

### 2. Discussion of the Related Art

Various types of cooking appliances for heating food are being used in homes or restaurants. Conventionally, gas ranges using gas as fuel have been widely distributed and used. However, recently, devices that heat an object to be heated, for example, a cooking vessel such as a pot, using electricity instead of gas have been distributed.

Methods of heating an object to be heated using electricity are largely divided into a resistance heating method and an induction heating method. The electric resistance method is a method of heating an object to be heated (e.g., a cooking vessel) by transferring heat, which is generated when a current flows through a metal resistance wire or a non-metallic heating element such as silicon carbide, to the object through radiation or conduction. The induction heating method is a method in which an object itself is heated by generating eddy currents in the object made of a metal component using a magnetic field generated around a coil when high-frequency power of a predetermined magnitude is applied to the coil.

Recently, the induction heating method is being applied to most cooking appliances.

A conventional cooking appliance of a household induction heating type operates through AC power having a frequency such as 50 Hz or 60 Hz supplied to a home. At this time, the frequency of a voltage input to a DC capacitor becomes twice the line frequency. Accordingly, a resonance current that transfers current to a vessel through high-speed switching includes a frequency component of 100 Hz or 120 Hz, and the corresponding frequency component exists within the human audible frequency range (20 Hz to 20 kHz). Accordingly, a user experiences discomfort due to noise caused by the frequency of the current transferred to the vessel.

### SUMMARY OF THE INVENTION

The present disclosure is directed to providing an induction heating type cooking appliance that reduces noise caused by a line frequency.

The present disclosure is directed to reducing noise caused by a line frequency through a voltage charging/discharging circuit and Constant Envelope Pulse Frequency Modulation (CE-PFM) switching modulation.

A cooking appliance according to an embodiment of the present disclosure may comprise a power supply; an inverter configured to switch a voltage input through the power supply; a working coil configured to generate a magnetic field when a current is supplied from the inverter; a controller configured to control a switching frequency of the inverter; and a voltage charging/discharging circuit configured to charge and discharge an input voltage input through the power supply to reduce a ripple of a resonance current flowing through the working coil.

The voltage charging/discharging circuit may be configured to: perform a charging operation when the input voltage is greater than a preset reference voltage; and perform a discharging operation when the input voltage is less than or equal to the reference voltage.

The reference voltage may be an RMS value of the input voltage.

The cooking appliance may further comprise a voltage sensing assembly configured to detect the input voltage.

The controller mat be configured to, during the discharging operation, maintain a voltage applied to the inverter at a constant level by using a charging voltage provided through the voltage charging/discharging circuit.

The controller may be configured to perform frequency control to adjust the switching frequency of the inverter for reducing the ripple of the resonance current.

The controller may be configured to adjust the switching frequency based on the input voltage.

The controller may be configured to: increase the switching frequency when the input voltage increases, and decrease the switching frequency when the input voltage decreases.

The controller may be configured to adjust the switching frequency based on the resonance current flowing through the working coil.

The controller may be configured to, when performing the frequency control, perform a frequency increase control and subsequently perform a frequency decrease control.

The voltage charging/discharging circuit may be formed as a buck-boost converter.

The controller may be configured to operate in a predetermined cycle, wherein each cycle includes: a first period in which the voltage charging/discharging circuit performs a charging operation while the controller adjusts the switching frequency of the inverter based on the input voltage; and a second period in which the voltage charging/discharging circuit performs a discharging operation.

The first period may include a frequency increase section in which the switching frequency increases and a frequency decrease section in which the switching frequency decreases.

According to an embodiment of the present disclosure, there is an advantage in that noise caused by a line frequency is reduced by controlling a voltage gain of a resonance network through switching frequency adjustment to constantly control a resonance current.

According to an embodiment of the present disclosure, there is an advantage in that noise caused by a line frequency is reduced by supplying power from an internal capacitor of the voltage charging/discharging circuit to the inverter to maintain a magnitude of a voltage applied to the inverter at a constant level.

### BRIEF DESCRIPTION OF THE DRAWINGS

FIG. 1 is a perspective view illustrating a cooking appliance and a cooking vessel according to an embodiment of the present disclosure.
FIG. 2 is a cross-sectional view of the cooking appliance and the cooking vessel according to an embodiment of the present disclosure.
FIG. 3 is a circuit diagram of a cooktop according to an embodiment of the present disclosure.
FIG. 4 is a view illustrating output characteristics of a cooktop according to an embodiment of the present disclosure.
FIG. 5 is an exemplary view illustrating a circuit diagram of a cooking appliance according to a first embodiment of the present disclosure.
FIG. 6 is an exemplary view illustrating a circuit diagram of the cooking appliance when the voltage charging/discharging circuit is a buck-boost circuit.
FIG. 7 is a view illustrating an output waveform according to the operation of a conventional cooking appliance.
FIG. 8 is a view illustrating an output waveform according to the operation according to the first embodiment of the present disclosure.
FIG. 9 is a control block diagram for explaining an operating method of a cooking appliance according to an embodiment of the present disclosure.
FIG. 10 is a flowchart illustrating an operating method of a cooking appliance according to an embodiment of the present disclosure.
FIG. 11 is a view illustrating an output waveform according to the operation according to a second embodiment of the present disclosure.
FIG. 12 shows simulation results of a conventional induction heating type cooking appliance.
FIG. 13 shows simulation results of an induction heating type cooking appliance according to the second embodiment of the present disclosure.

### DETAILED DESCRIPTION OF THE PREFERRED EMBODIMENTS

Hereinafter, embodiments related to the present disclosure will be described in more detail with reference to the drawings. The suffixes "module" and "unit" for components used in the following description are given or used interchangeably only in consideration of ease of preparing the specification, and do not themselves have distinct meanings or roles from each other.

Hereinafter, a cooking appliance and an operating method thereof according to an embodiment of the present disclosure will be described. Hereinafter, the "cooking appliance" may refer to an induction heating type cooktop, but is not limited thereto.

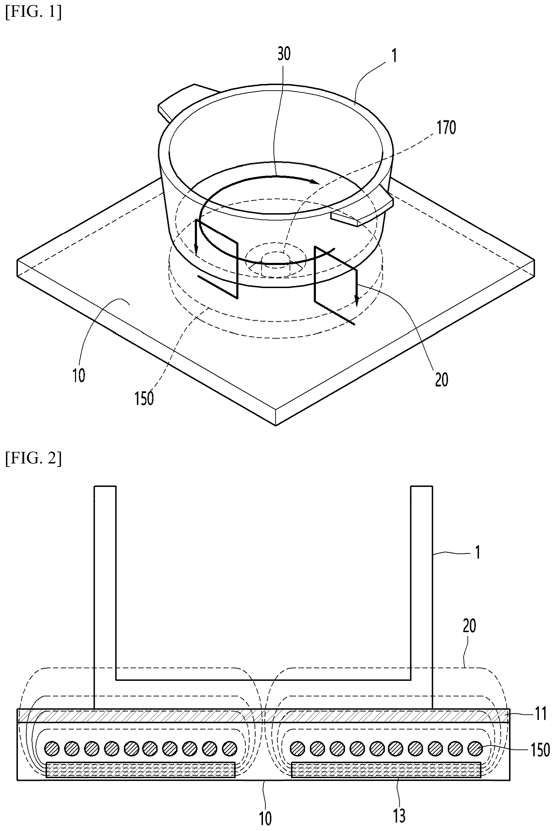

FIG. 1 is a perspective view illustrating a cooking appliance and a cooking vessel according to an embodiment of the present disclosure, and FIG. 2 is a cross-sectional view of the cooking appliance and the cooking vessel according to an embodiment of the present disclosure.

The cooking vessel 1 may be positioned on the cooking appliance 10, and the cooking appliance 10 may heat the cooking vessel 1 positioned thereon.

First, a method by which the cooking appliance 10 heats the cooking vessel 1 will be described.

As illustrated in FIG. 1, the cooking appliance 10 may generate a magnetic field 20 such that at least a portion of the magnetic field passes through the cooking vessel 1. At this time, if the material of the cooking vessel 1 includes an electric resistance component, the magnetic field 20 may induce eddy currents 30 in the cooking vessel 1. These eddy currents 30 cause the cooking vessel 1 itself to generate heat, and since this heat is transferred to the inside of the cooking vessel 1 through conduction or radiation, the contents of the cooking vessel 1 can be cooked.

On the other hand, when the material of the cooking vessel 1 does not include an electric resistance component, the eddy currents 30 are not generated. Accordingly, in this case, the cooking appliance 10 cannot heat the cooking vessel 1.

Therefore, the cooking vessel 1 that can be heated by the cooking appliance 10 may be a stainless steel-based vessel or a metal material vessel such as an enamel or cast iron vessel.

Next, a method by which the cooking appliance 10 generates the magnetic field 20 will be described.

As illustrated in FIG. 2, the cooking appliance 10 may include at least one of an upper plate 11, a working coil 150, and a ferrite core 13.

The cooking vessel 1 is placed on the upper plate 11, and the upper plate 11 may support the cooking vessel 1. That is, the cooking vessel 1 may be placed on the upper surface of the upper plate 11. A heating area in which the cooking vessel 1 is heated may be formed on the upper plate 11.

Further, the upper plate 11 may be formed of tempered glass of a ceramic material synthesized from various minerals. Accordingly, the upper plate 11 can protect the cooking appliance 10 from external impacts and the like.

In addition, the upper plate 11 can prevent foreign substances such as dust from entering the inside of the cooking appliance 10.

The working coil 150 may be positioned below the upper plate 11. Current may or may not be supplied to the working coil 150 to generate the magnetic field 20. Specifically, current may or may not flow through the working coil 150 according to turning on/off of a switching element inside the cooking appliance 10.

When current flows through the working coil 150, the magnetic field 20 is generated, and the magnetic field 20 may generate the eddy currents 30 upon meeting the electric resistance component included in the cooking vessel 1. The eddy currents heat the cooking vessel 1, and accordingly, the contents of the cooking vessel 1 can be cooked.

In addition, the heating power of the cooking appliance 10 may be adjusted according to the amount of current flowing through the working coil 150. As a specific example, as the current flowing through the working coil 150 increases, more magnetic fields 20 are generated, and accordingly, the magnetic field passing through the cooking vessel 1 increases, so that the heating power of the cooking appliance 10 can be increased.

The ferrite core 13 is a component for protecting an internal circuit of the cooking appliance 10. Specifically, the ferrite core 13 serves as a shield that blocks the influence of the magnetic field 20 generated from the working coil 150 or an electromagnetic field generated from the outside on the internal circuit of the cooking appliance 10.

To this end, the ferrite core 13 may be formed of a material having very high permeability. The ferrite core 13 serves to induce the magnetic field entering the inside of the cooking appliance 10 to flow through the ferrite core 13 without being radiated. The movement of the magnetic field 20 generated from the working coil 150 by the ferrite core 13 may be as illustrated in FIG. 2.

Meanwhile, the cooking appliance 10 may further include other components in addition to the above-described upper plate 11, working coil 150, and ferrite core 13. For example, the cooking appliance 10 may further include an insulating material (not shown) positioned between the upper plate 11 and the working coil 150. That is, the cooktop according to the present disclosure is not limited to the cooking appliance 10 illustrated in FIG. 2.

In addition, the cooking appliance 10 may include a temperature sensor for estimating the temperature of the cooking vessel 1. For example, the temperature sensor 170 may be positioned at the center of the working coil 150 as illustrated in FIG. 1 to estimate the temperature of the cooking vessel 1 by sensing the temperature of the upper plate 11.

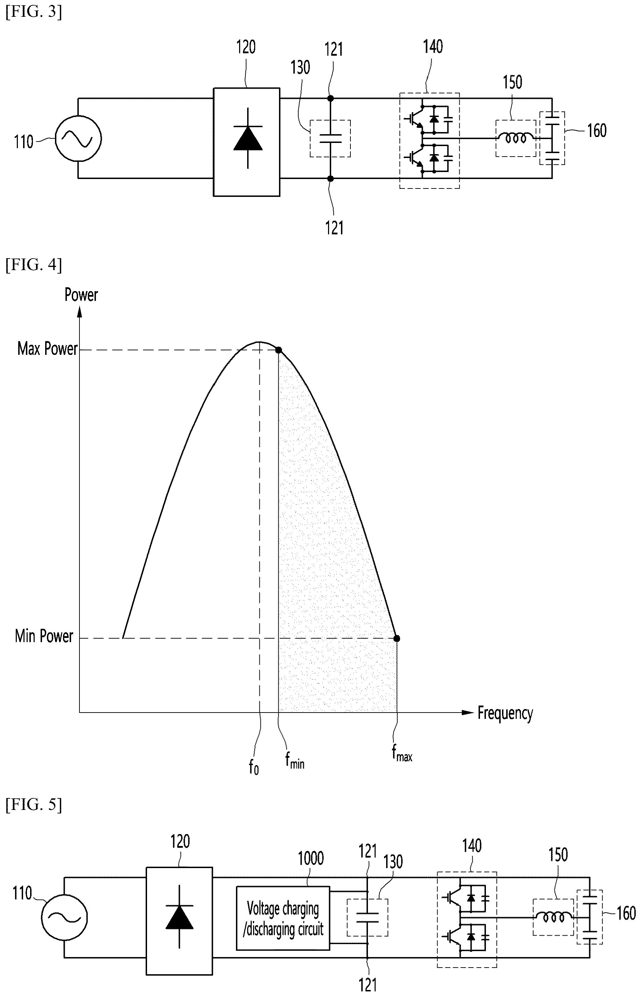

FIG. 3 is a circuit diagram of a cooktop according to an embodiment of the present disclosure.

The circuit diagram of the cooking appliance 10 illustrated in FIG. 3 is merely an example for convenience of description, and the present disclosure is not limited thereto.

Referring to FIG. 3, an induction heating type cooktop may include at least some or all of a power supply 110, a rectifier 120, a DC link capacitor 130, an inverter 140, a working coil 150, and a resonance capacitor 160.

The power supply 110 may receive external power. The power received by the power supply 110 from the outside may be AC (Alternating Current) power.

The power supply 110 may supply an AC voltage to the rectifier 120.

The rectifier 120 is an electrical device for converting AC into DC. The rectifier 120 converts an AC voltage supplied through the power supply 110 into a DC voltage. The rectifier 120 may supply the converted voltage to DC terminals 121.

An output terminal of the rectifier 120 may be connected to the DC terminals 121. The DC terminals 121 output through the rectifier 120 may be referred to as a DC link. A voltage measured at the DC terminals 121 is referred to as a DC link voltage.

The DC link capacitor 130 serves as a buffer between the power supply 110 and the inverter 140. Specifically, the DC link capacitor 130 is used to maintain the DC link voltage converted through the rectifier 120 and supply it to the inverter 140.

The inverter 140 serves to switch a voltage applied to the working coil 150 so that a high-frequency current flows through the working coil 150. The inverter 140 may include a semiconductor switch, and the semiconductor switch may be an IGBT (Insulated Gate Bipolar Transistor) or a WBG (Wide Band Gap) device, but since this is merely exemplary, it is appropriate that the present disclosure is not limited thereto. Meanwhile, the WBG device may be SiC (Silicon Carbide) or GaN (Gallium Nitride). The inverter 140 causes a high-frequency current to flow through the working coil 150 by driving the semiconductor switch, thereby forming a high-frequency magnetic field in the working coil 150.

Current may or may not flow through the working coil 150 according to whether the switching element is driven. When current flows through the working coil 150, a magnetic field is generated. The working coil 150 may heat the cooking vessel by generating a magnetic field as current flows.

One side of the working coil 150 is connected to a connection point of the switching element of the inverter 140, and the other side is connected to the resonance capacitor 160.

The driving of the switching element is performed by a driver (not shown), and the switching element is controlled at a switching time output from the driver to apply a high-frequency voltage to the working coil 150 while the switching elements operate alternately. Since the on/off time of the switching element applied from the driver (not shown) is controlled in a gradually compensated form, the voltage supplied to the working coil 150 changes from a low voltage to a high voltage.

The resonance capacitor 160 may be a component for acting as a buffer. The resonance capacitor 160 adjusts a saturation voltage rising rate during the turn-off of the switching element, thereby affecting energy loss during the turn-off time.

In the case of the cooking appliance 10 configured with the circuit diagram as illustrated in FIG. 3, a resonance frequency is determined by an inductance value of the working coil 150 and a capacitance value of the resonance capacitor 160. A resonance curve is formed around the determined resonance frequency, and the resonance curve may represent output power of the cooking appliance 10 according to a frequency band.

FIG. 4 is a view illustrating output characteristics of a cooktop according to an embodiment of the present disclosure.

First, a Q factor (quality factor) may be a value representing the sharpness of resonance in a resonance circuit. Accordingly, in the case of the cooking appliance 10, the Q factor is determined by the inductance value of the working coil 150 and the capacitance value of the resonance capacitor 160. The resonance curve varies according to the Q factor. Therefore, the cooking appliance 10 has different output characteristics depending on the inductance value of the working coil 150 and the capacitance value of the resonance capacitor 160.

FIG. 4 illustrates an example of a resonance curve according to the Q factor. In general, as the Q factor increases, the shape of the curve becomes sharper, and as the Q factor decreases, the shape of the curve becomes broader.

A horizontal axis of the resonance curve may represent frequency, and a vertical axis may represent output power. The vertical axis may also represent voltage gain.

A frequency at which maximum power is output in the resonance curve is referred to as a resonance frequency f₀.

Generally, the cooking appliance 10 uses a frequency in a right region based on the resonance frequency f₀ of the resonance curve. In addition, a minimum operating frequency and a maximum operating frequency at which the cooking appliance 10 can operate may be preset.

Upon receiving a heating command, the cooking appliance 10 may determine an operating frequency according to a heating power level set in the heating command. Specifically, the cooking appliance 10 may adjust output power by lowering the operating frequency as the set heating power level is higher and increasing the operating frequency as the set heating power level is lower. That is, upon receiving a heating command, the cooking appliance 10 may perform a heating mode operating among the operating frequency range according to the set heating power.

The cooking appliance 10 may operate at a frequency corresponding to a range from a maximum operating frequency fmax to a minimum operating frequency fmin. That is, the operating frequency range of the cooking appliance 10 may be from the maximum operating frequency fmax to the minimum operating frequency fmin.

The maximum operating frequency fmax may be an IGBT maximum switching frequency. The IGBT maximum switching frequency may mean a maximum frequency at which driving is possible in consideration of the breakdown voltage and capacity of an IGBT switching element.

For example, the maximum operating frequency fmax may be 75 kHz, and the minimum operating frequency fmin may be about 20 kHz. However, the set values of the maximum operating frequency fmax and the minimum operating frequency fmin described above are merely exemplary and are not limited thereto.

Meanwhile, a conventional cooking appliance operates through AC power having a frequency such as 50 Hz or 60 Hz supplied to a home. A frequency of a voltage input to a DC capacitor becomes twice a line frequency. Accordingly, a frequency component of 100 Hz or 120 Hz is included in a resonance current that transfers current to a vessel through high-speed switching. Since the corresponding frequency component is included in the human audible frequency range (20 Hz to 20 kHz), noise is generated.

The present disclosure can reduce noise caused by a line frequency by applying at least one of a voltage charging/discharging circuit and Constant Envelope Pulse Frequency Modulation (CE-PFM) switching modulation.

According to a first embodiment, the present disclosure can reduce noise caused by a line frequency by applying a voltage charging/discharging circuit.

The cooking appliance 10 according to the first embodiment of the present disclosure may further include a voltage charging/discharging circuit 1000.

FIG. 5 is an exemplary view illustrating a circuit diagram of a cooking appliance according to the first embodiment of the present disclosure.

For example, the cooking appliance 10 may include a power supply 110, a rectifier 120, a DC link capacitor 130, an inverter 140, a working coil 150, a resonance capacitor 160, and a voltage charging/discharging circuit 1000. Since the remaining components except for the voltage charging/discharging circuit 1000 are the same as those described above, redundant descriptions thereof will be omitted.

The voltage charging/discharging circuit 1000 may charge a voltage and discharge the charged voltage. The voltage charging/discharging circuit 1000 may alternately perform a voltage charging operation and a voltage discharging operation.

The voltage charging/discharging circuit 1000 may be a Line-frequency Noise Suppressor (LNS) circuit. As an example, the voltage charging/discharging circuit 1000 may be a buck-boost circuit.

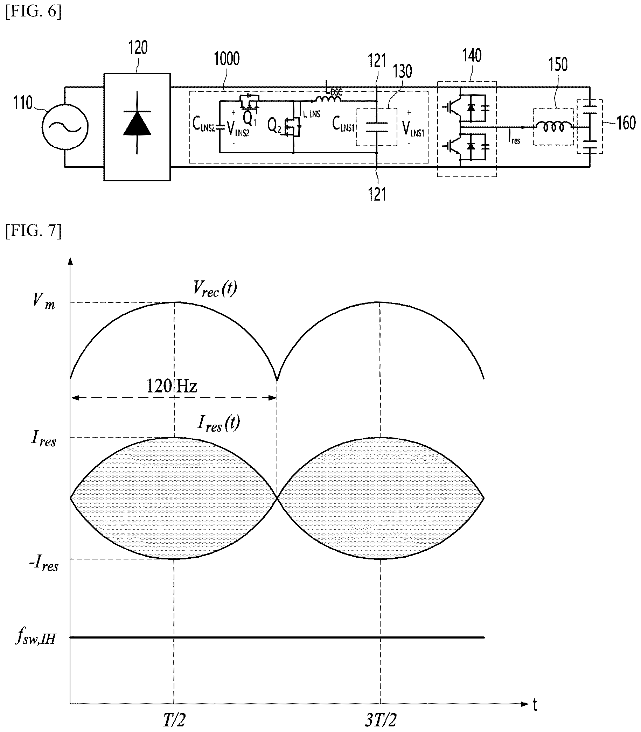

FIG. 6 is an exemplary view illustrating a circuit diagram of the cooking appliance when the voltage charging/discharging circuit is a buck-boost circuit.

However, this is merely an example, and it is appropriate that the voltage charging/discharging circuit 1000 is not limited to a buck-boost circuit. However, for convenience of description, the description will be given assuming that the voltage charging/discharging circuit 1000 is a buck-boost circuit with reference to FIG. 6.

The voltage charging/discharging circuit 1000 may include first and second capacitors C_{LNS1}, C_{LNS2}, first and second switches Q₁, Q₂, and an inductor L_{DSC}. The first capacitor C_{LNS1} may be the DC link capacitor 130.

The second capacitor C_{LNS2} and the first switch Q₁ may be connected in series, and the second switch Q₂ may be connected in parallel thereto. One end of the inductor L_{DSC} may be connected between the first switch Q₁ and the second switch Q₂), and the other end of the inductor L_{DSC} may be connected to one end of the first capacitor C_{LNS1}.

An operation of charging and then discharging a voltage may be repeated in the second capacitor C_{LNS2}. As the first switch Q₁ and the second switch Q₂ operate alternately, a voltage may be charged/discharged in the second capacitor C_{LNS2}.

When the second capacitor C_{LNS2} is discharged, an envelope of a resonance current Iᵣₑₛ may be formed in DC. Accordingly, a ripple of the resonance current Iᵣₑₛ is reduced, so that noise can be reduced.

According to a second embodiment, the present disclosure can further reduce noise caused by a line frequency by further applying Constant Envelope Pulse Frequency Modulation (CE-PFM) switching modulation to the voltage charging/discharging circuit.

FIG. 7 is a view illustrating an output waveform according to the operation of a conventional cooking appliance.

Referring to FIG. 7, the switching frequency f_{sw} is constant, and the envelope of the resonance current Iᵣₑₛ may be formed in AC. That is, a ripple exists in the resonance current Iᵣₑₛ, and noise is generated accordingly.

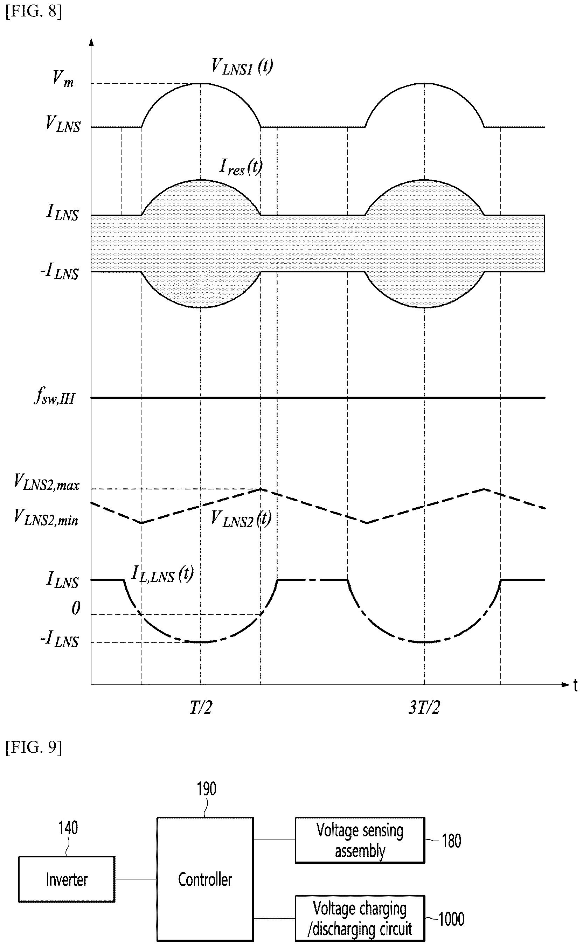

FIG. 8 is a view illustrating an output waveform according to the operation according to the first embodiment of the present disclosure.

Referring to FIG. 8, it can be seen that voltage charging and discharging are repeated in the second capacitor C_{LNS2} by the alternating operation of the first switch Q₁ and the second switch Q₂. While a voltage is charged in the second capacitor C_{LNS2}, the envelope of the resonance current Iᵣₑₛ is formed in AC, but it can be confirmed that while a voltage is discharged from the second capacitor C_{LNS2}, the envelope of the resonance current Iᵣₑₛ is formed in DC.

Accordingly, compared with the output waveform of FIG. 7, it can be confirmed that noise is reduced at least in a voltage discharging period of the second capacitor C_{LNS2}.

Meanwhile, according to the second embodiment of the present disclosure, noise caused by the resonance current Iᵣₑₛ can be further reduced by further applying switching frequency control.

According to the second embodiment of the present disclosure, the cooking appliance 10 can further reduce noise through switching frequency control while charging and discharging a voltage through the voltage charging/discharging circuit 1000.

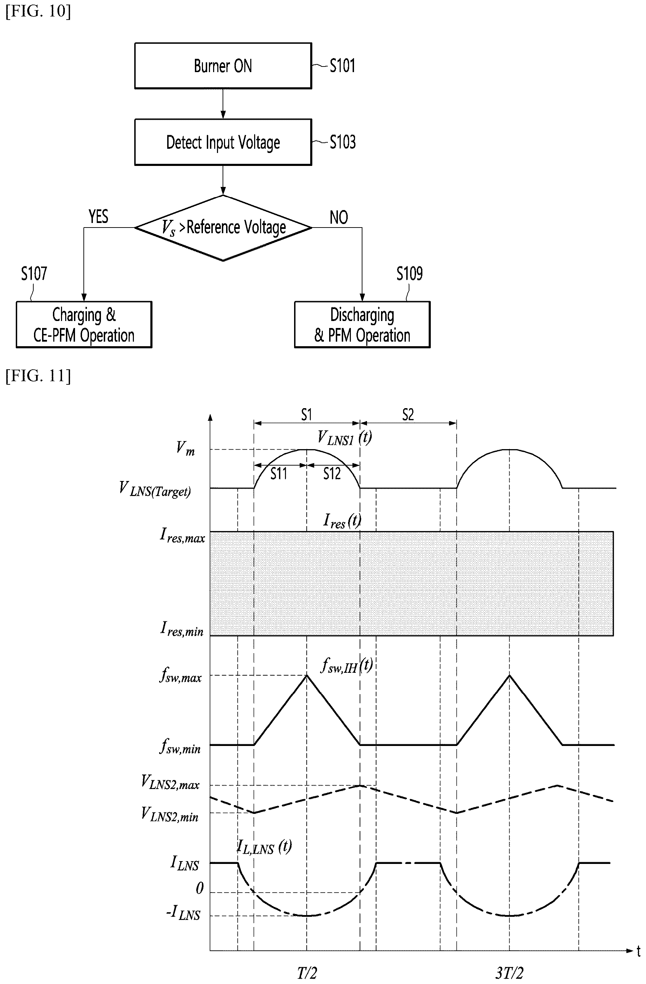

FIG. 9 is a control block diagram for explaining an operating method of a cooking appliance according to an embodiment of the present disclosure, and FIG. 10 is a flowchart illustrating an operating method of a cooking appliance according to an embodiment of the present disclosure.

Meanwhile, a circuit diagram of the cooking appliance according to the second embodiment may be the same as a circuit diagram of the first embodiment.

The cooking appliance 10 may include an inverter 140, a voltage sensing assembly 180, a controller 190, and a voltage charging/discharging circuit 1000.

The inverter 140 may switch a voltage input through the power supply 110.

The voltage sensing assembly 180 may detect an input voltage.

The controller 190 may control the inverter 140, the voltage sensing assembly 180, and the like. The controller 190 may control a switching frequency of the inverter 140.

A burner of the cooking appliance 10 may be turned on (S101).

When the burner of the cooking appliance 10 is turned on, the voltage sensing assembly 180 may detect an input voltage (S103).

The input voltage Vₛ may be a voltage supplied through the power supply 110. When the burner is turned on, the controller 190 may control the voltage sensing assembly 180 to detect the input voltage.

The controller 190 detects the input voltage and may determine whether the detected input voltage is greater than a predetermined reference voltage.

The reference voltage may be a voltage preset to determine the operation of the voltage charging/discharging circuit 1000. The reference voltage may be a constant. The reference voltage may be set differently according to a size of the burner, specifications of the inverter 140, and the like.

For example, the reference voltage may be an RMS value of the input voltage. That is, the reference voltage may be an RMS voltage of the input voltage.

If the input voltage is greater than the reference voltage, the controller 190 may perform a charging operation and a CE-PFM operation (S107).

If the input voltage is greater than the reference voltage, the controller 190 may control the voltage charging/discharging circuit 1000 to perform a charging operation and control the inverter 140 to perform a CE-PFM operation.

The charging operation is an operation in which a voltage is charged in the second capacitor C_{LNS2}, and the CE-PFM operation may be an operation of constantly controlling the switching frequency of the inverter 140.

That is, the controller 190 may further perform frequency control to adjust the switching frequency of the inverter 140 for reducing the ripple of the resonance current Iᵣₑₛ.

Meanwhile, step S107 may be a first period (S1) of FIG. 11. That is, an output waveform in step S107 may be the same as the first period (S1) of FIG. 11.

If the input voltage is less than or equal to the reference voltage, the controller 190 may perform a discharging operation and a PFM operation (S109).

If the input voltage is less than or equal to the reference voltage, the controller 190 may control the voltage charging/discharging circuit 1000 to perform a discharging operation and control the inverter 140 to perform a PFM operation.

The discharging operation is an operation in which the voltage charged in the second capacitor C_{LNS2} is discharged, and the PFM operation may be an operation of variably controlling the switching frequency of the inverter 140.

Meanwhile, step S109 may be a second period (S2) of FIG. 11. That is, an output waveform in step S109 may be the same as the second period (S2) of FIG. 11.

As described above, noise can be reduced by forming the envelope of the resonance current Iᵣₑₛ in DC in the voltage charging period through frequency control as well as the voltage charging/discharging operation.

FIG. 11 is a view illustrating an output waveform according to the operation according to the second embodiment of the present disclosure.

In FIG. 11, a first period (S1) is a period in which the voltage charging/discharging circuit 1000 performs a charging operation, and may be a period in which a voltage is charged in the second capacitor C_{LNS2}. The controller 190 may charge the second capacitor C_{LNS2} using the input voltage Vs in the first period (S1). The first period (S1) may be a period in which the input voltage is greater than a predetermined reference voltage V_{LNS(Target)}. The first period (S1) may be an output waveform resulting from performing step S107 of FIG. 10. The first period (S1) may be a period in which frequency increase control is performed.

A second period (S2) is a period in which the voltage charging/discharging circuit 1000 performs a discharging operation, and may be a period in which the charging voltage in the second capacitor C_{LNS2} is discharged. The second period (S2) may be a period in which the input voltage is less than or equal to the predetermined reference voltage. Specifically, the second period (S2) may be a period in which the input voltage is less than or equal to the predetermined reference voltage V_{LNS(Target)}. The second period (S2) may be an output waveform resulting from performing step S109 of FIG. 10. The second period (S2) may be a period in which frequency decrease control is performed.

In the second period (S2), since the envelope of the resonance current Iᵣₑₛ is formed in DC while the charging voltage of the second capacitor C_{LNS2} is discharged, the frequency can be controlled to be constant. That is, the controller 190 may constantly control the switching frequency in the second period (S2).

The controller 190 may form the envelope of the resonance current Iᵣₑₛ in DC by adjusting the switching frequency in the first period (S1).

For example, when the actual voltage is greater than or equal to the RMS voltage of the line, the controller 190 charges the internal capacitor C_{LNS2} of the voltage charging/discharging circuit 1000, and can constantly control the resonance current Iᵣₑₛ by adjusting the voltage gain of the resonance network through the adjustment of the switching frequency of the inverter 140.

That is, the first period (S1) may be both a charging period of the voltage charging/discharging circuit 1000 and a frequency adjustment period.

The first period (S1) may be divided into a frequency increase section (S11) and a frequency decrease section (S12).

The frequency increase section (S11) may be a section for increasing the switching frequency, and the frequency decrease section (S12) may be a section for decreasing the switching frequency.

First, the frequency increase section (S11) will be described. This is a section where the input voltage increases; as the input voltage increases, the resonance current Iᵣₑₛ also increases, causing the envelope to fluctuate. Accordingly, the controller 190 may lower the voltage gain of the resonance network by increasing the switching frequency when the input voltage increases. As the voltage gain decreases, the resonance current Iᵣₑₛ is reduced, allowing the envelope to be formed similarly to DC.

Next, the frequency decrease section (S12) will be described. This is a section where the input voltage decreases; as the input voltage decreases, the resonance current Iᵣₑₛ also decreases, causing the envelope to fluctuate. Accordingly, the controller 190 may raise the voltage gain of the resonance network by decreasing the switching frequency when the input voltage decreases. As the voltage gain increases, the resonance current Iᵣₑₛ increases, allowing the envelope to be formed similarly to DC.

Therefore, in the first period (S1), the controller 190 may perform the frequency increase control and subsequently perform the frequency decrease control.

Meanwhile, there may be various methods for the controller 190 to adjust the switching frequency in the first period (S1). That is, there may be various methods for the controller 190 to variably control the switching frequency in the first period (S1).

According to an embodiment, the controller 190 may adjust the switching frequency based on the input voltage. The controller 190 may control the switching frequency to follow the input voltage. The controller 190 may increase the switching frequency of the inverter 140 as the input voltage increases, and decrease the switching frequency of the inverter 140 as the input voltage decreases.

There may be various methods for varying the switching frequency.

As an example, the controller 190 may perform control such that the switching frequency increases in proportion to the input voltage.

As another example, the controller 190 may determine whether the input voltage increases or decreases at predetermined time intervals, and if the input voltage increases, increase the switching frequency from the current value by a predetermined amount, and if the input voltage decreases, decrease the switching frequency from the current value by a predetermined amount.

According to another embodiment, the controller 190 may adjust the switching frequency based on the resonance current Iᵣₑₛ. The controller 190 may control the switching frequency to increase or decrease in proportion to the resonance current Iᵣₑₛ.

When the input voltage is at its maximum value, the controller 190 may also control the switching frequency to be at its maximum.

That is, in the first period (S1), the controller 190 can vary the voltage gain by varying the driving frequency of the inverter 140. Due to the variation in voltage gain, the envelope fluctuation of the resonance current Iᵣₑₛ can also be eliminated. That is, the envelope of the resonance current Iᵣₑₛ may be formed similarly to when the input voltage is DC.

In the second period (S2), the controller 190 may fix the voltage of the first capacitor C_{LNS1} to the input voltage Vs by using the second capacitor C_{LNS2}. That is, during the discharging operation, the controller 190 can maintain the voltage applied to the inverter 140 at a constant level by using the charging voltage provided through the voltage charging/discharging circuit 1000.

For example, when the actual voltage is less than or equal to the RMS voltage (reference voltage) of the power supply, the controller 190 may supply power from the internal capacitor C_{LNS2} of the voltage charging/discharging circuit 1000 to the inverter 140 to control the voltage of the first capacitor C_{LNS1} so that the magnitude of the input voltage RMS is maintained.

That is, when the controller 190 operates the inverter 140 using the charging voltage of the second capacitor C_{LNS2}, the resonance current Iᵣₑₛ can be maintained constant without frequency fluctuation of the inverter 140 due to the constant voltage of the first capacitor C_{LNS1}. That is, the envelope of the resonance current Iᵣₑₛ becomes constant.

In summary, the controller 190 operates in a predetermined cycle, and each cycle may include a first period (S1) in which the voltage charging/discharging circuit 1000 performs a charging operation while adjusting the switching frequency of the inverter 140 based on the input voltage, and a second period (S2) in which the voltage charging/discharging circuit 1000 performs a discharging operation. Furthermore, it can be confirmed that the ripple of the resonance current Iᵣₑₛ is minimized in the first and second periods (S1)(S2), and accordingly, noise reduction can be confirmed.

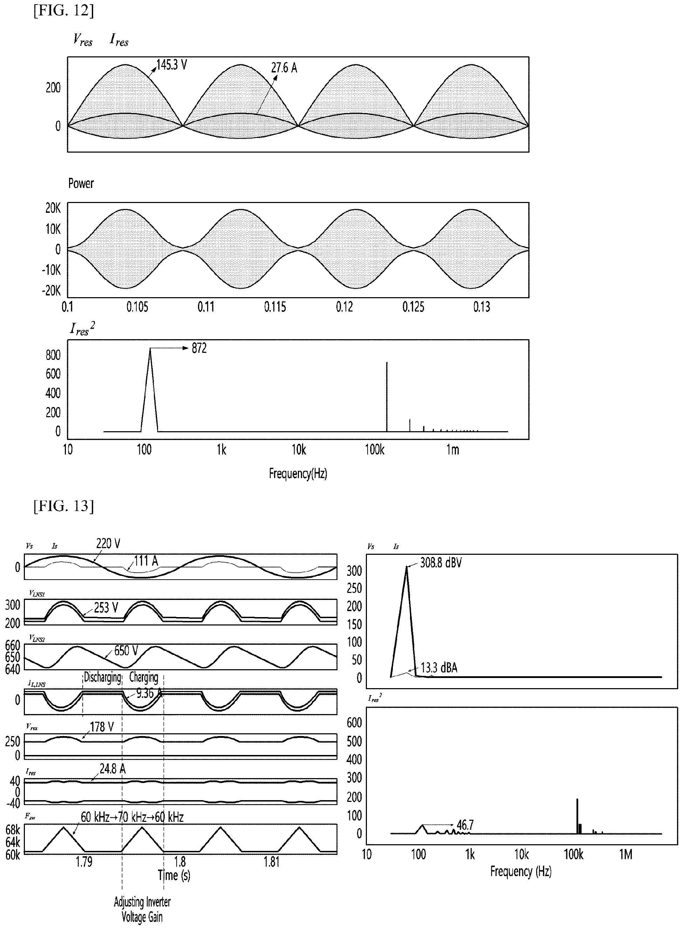

FIG. 12 shows simulation results of a conventional induction heating type cooking appliance, and FIG. 13 shows simulation results of an induction heating type cooking appliance according to the second embodiment of the present disclosure.

The squared value of the resonance current Iᵣₑₛ is a numerical value representing noise according to the operation of the cooking appliance. Looking at the squared value of the resonance current Iᵣₑₛ at 120 Hz, it is 872 in the conventional case, but it is 46.7 in the present disclosure, confirming that the noise is significantly reduced.

The above description is merely illustrative of the technical idea of the present disclosure, and those of ordinary skill in the art to which the present disclosure pertains will be able to make various modifications and variatlions without departing from the essential characteristics of the present disclosure.

Therefore, the embodiments disclosed in the present disclosure are not intended to limit but to explain the technical idea of the present disclosure, and the scope of the technical idea of the present disclosure is not limited by these embodiments.

The scope of protection of the present disclosure should be interpreted by the following claims, and all technical ideas within the equivalent range should be interpreted as being included in the scope of the rights of the present disclosure.

## Claims

1. A cooking appliance (10), comprising:
a power supply (110);
an inverter (140) configured to switch a voltage input through the power supply (110); a working coil (150) configured to generate a magnetic field when a current is supplied from the inverter (140);
a controller (190) configured to control a switching frequency of the inverter (140); and
a voltage charging/discharging circuit (1000) configured to charge and discharge an input voltage input through the power supply (110) to reduce a ripple of a resonance current flowing through the working coil (150).

2. The cooking appliance (10) according to claim 1, wherein the voltage charging/discharging circuit (1000) is configured to:
perform a charging operation when the input voltage is greater than a preset reference voltage; and
perform a discharging operation when the input voltage is less than or equal to the reference voltage.

3. The cooking appliance (10) according to claim 2, wherein the reference voltage is an RMS value of the input voltage.

4. The cooking appliance (10) according to any one of the preceding claims, further comprising a voltage sensing assembly (180) configured to detect the input voltage.

5. The cooking appliance (10) according to any one of claims 2 to 4, wherein the controller (190) is configured to, during the discharging operation, maintain a voltage applied to the inverter (140) at a constant level by using a charging voltage provided through the voltage charging/discharging circuit (1000).

6. The cooking appliance (10) according to any one of preceding claims, wherein the controller (190) is configured to perform frequency control to adjust the switching frequency of the inverter (140) for reducing the ripple of the resonance current.

7. The cooking appliance (10) according to claim 6, wherein the controller (190) is configured to adjust the switching frequency based on the input voltage.

8. The cooking appliance (10) according to claim 7, wherein the controller (190) is configured to:
increase the switching frequency when the input voltage increases, and
decrease the switching frequency when the input voltage decreases.

9. The cooking appliance (10) according to claim 6, wherein the controller (190) is configured to adjust the switching frequency based on the resonance current flowing through the working coil (150).

10. The cooking appliance (10) according to claim 6, wherein the controller (190) is configured to, when performing the frequency control, perform a frequency increase control and subsequently perform a frequency decrease control.

11. The cooking appliance (10) according to any one of preceding claims, wherein the voltage charging/discharging circuit (1000) is formed as a buck-boost converter.

12. The cooking appliance (10) according to any one of preceding claims, wherein the controller (190) is configured to operate in a predetermined cycle,
wherein each cycle includes: a first period (S1) in which the voltage charging/discharging circuit (1000) performs a charging operation while the controller (190) adjusts the switching frequency of the inverter (140) based on the input voltage; and a second period (S2) in which the voltage charging/discharging circuit (1000) performs a discharging operation.

13. The cooking appliance (10) according to claim 12, wherein the first period (S1) includes a frequency increase section (s 11) in which the switching frequency increases and a frequency decrease section (S12) in which the switching frequency decreases.
